(19) Europäisches Patentamt
European Patent Office
Office européen des brevets

(11) **EP 2 294 552 B1**

(12) **FASCICULE DE BREVET EUROPEEN**

(45) Date de publication et mention
de la délivrance du brevet:
**09.11.2011 Bulletin 2011/45**

(51) Int Cl.:
***G06T 5/00*** *(2006.01)*     ***G06T 5/20*** *(2006.01)*

(21) Numéro de dépôt: **09738341.8**

(86) Numéro de dépôt international:
**PCT/FR2009/000445**

(22) Date de dépôt: **16.04.2009**

(87) Numéro de publication internationale:
**WO 2009/133307 (05.11.2009 Gazette 2009/45)**

(54) **DISPOSITIF DE TRAITEMENT D'IMAGES AMÉLIORÉ**

VERBESSERTE EINRICHTUNG ZUM VERARBEITEN VON BILDERN

IMPROVED DEVICE FOR PROCESSING IMAGES

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **21.04.2008 FR 0802206**

(43) Date de publication de la demande:
**16.03.2011 Bulletin 2011/11**

(73) Titulaires:
• **Inria Institut National de Recherche en Informatique et en Automatique**
**78150 Le Chesnay (FR)**
• **CENTRE NATIONAL DE LA RECHERCHE SCIENTIFIQUE (CNRS)**
**75794 Paris Cedex 16 (FR)**
• **Institut National de Recherche en Agronomie (INRA)**
**75338 Paris Cedex 07 (FR)**
• **Université de Rennes 1**
**35065 Rennes Cedex (FR)**

(72) Inventeurs:
• **COUPE, Pierrick**
**Montréal, Quebec H2J 2M1 (CA)**
• **BARILLOT, Christian**
**F-35890 Laille (FR)**
• **HELLIER, Pierre**
**F-35235 Thorigne Fouillard (FR)**
• **KERVRANN, Charles**
**F-35520 La Chapelle des Fougeretz (FR)**

(74) Mandataire: **Lavé, Stéphanie et al**
**Cabinet Lavoix**
**2, Place d'Estienne d'Orves**
**75441 Paris Cedex 09 (FR)**

(56) Documents cités:
**EP-A- 1 367 536     WO-A-2005/122086**

• **CHARLES KERVRANN ET AL: "Bayesian Non-local Means Filter, Image Redundancy and Adaptive Dictionaries for Noise Removal" SCALE SPACE AND VARIATIONAL METHODS IN COMPUTER VISION; [LECTURE NOTES IN COMPUTER SCIENCE;;LNCS], SPRINGER BERLIN HEIDELBERG, BERLIN, HEIDELBERG, vol. 4485, 30 mai 2007 (2007-05-30), pages 520-532, XP019060276**
• **COUPE P ET AL: "An Optimized Blockwise Nonlocal Means Denoising Filter for 3-D Magnetic Resonance Images" IEEE TRANSACTIONS ON MEDICAL IMAGING, IEEE SERVICE CENTER, PISCATAWAY, NJ, US, vol. 27, no. 4, 1 avril 2008 (2008-04-01), pages 425-441, XP011202183 ISSN: 0278-0062**
• **BUADES A ET AL: "A review of image denoising algorithms, with a new one" MULTISCALE MODELING & SIMULATION, SOCIETY FOR INDUSTRIAL AND APPLIED MATHEMATICS, US, vol. 4, no. 2, 18 juillet 2005 (2005-07-18), pages 490-530, XP002496485 ISSN: 1540-3459**

**Description**

L'invention concerne un dispositif de traitement d'images pour améliorer une image, par exemple une image acquise avec un dispositif d'imagerie.

De nos jours, une opération d'imagerie comporte classiquement une étape d'acquisition de données d'images, et une étape d'affichage de l'image acquise.

En fonction de la méthode d'imagerie choisie (par exemple ultrason, IRM, rayons X etc.) et du type de matériel employé pour l'acquisition de l'image, l'image acquise présente une qualité plus ou moins propre à une exploitation au moyen d'un affichage.

Dans le cas particulier de l'imagerie par ultrasons, une composante de bruits particulièrement gênante est le bruit appelé « chatoiement » (« speckle » en anglais). Ce type de bruit est particulièrement gênant.

En effet, il est extrêmement difficile à réduire, est de nature difficilement modélisable, et requiert des moyens conséquents de calcul pour obtenir des résultats satisfaisants. Tous ces problèmes rendent difficile une opération de débruitage permettant un affichage en temps réel.

Des solutions de débruitage ont été développées, mais leurs performances sont insuffisantes.

L'article de C.Kervrann et al. "Bayesian Non-Local Means Filter, Image Redundancy and Adaptive Dictionaries for Noise Removal", LNCS 4485, 2007, décrit une méthode de débruitage d'image.

L'invention vient à améliorer la situation.

À cet effet, l'invention propose un dispositif de traitement d'image, tel que décrit à la revendication 1.

Un tel dispositif est avantageux car il permet de réaliser un débruitage extrêmement efficace, tout en présentant des coûts de calcul raisonnables.

D'autres caractéristiques et avantages de l'invention apparaîtront mieux à la lecture de la description qui suit, tirée d'exemples donnés à titre illustratif et non limitatif, tirés des dessins sur lesquels :

- la figure 1 représente une vue schématique d'un dispositif selon l'invention ;

- la figure 2 est un diagramme représentant les étapes principales d'un traitement d'images selon l'invention ;

- la figure 3 représente un premier mode de réalisation en exemple d'une étape de la figure 2 ;

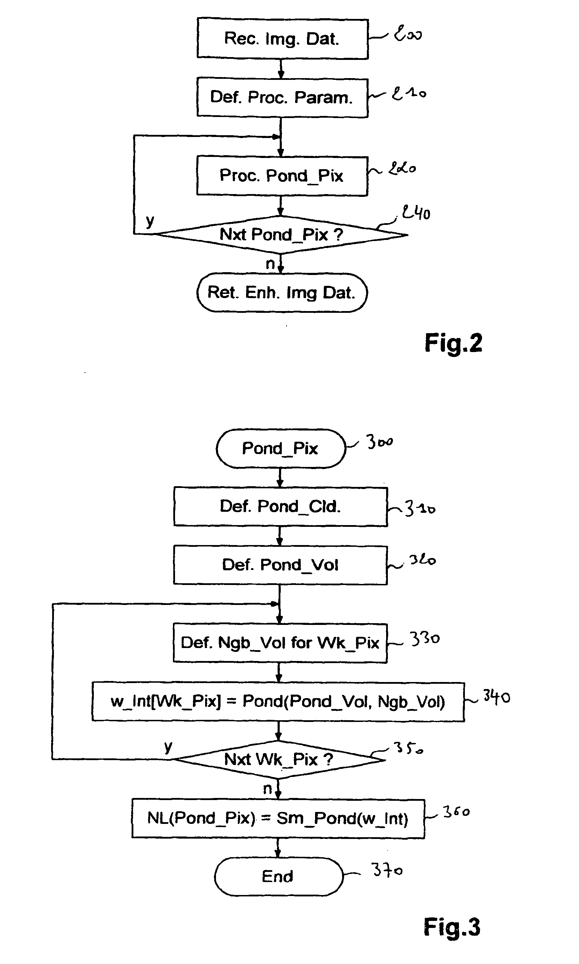

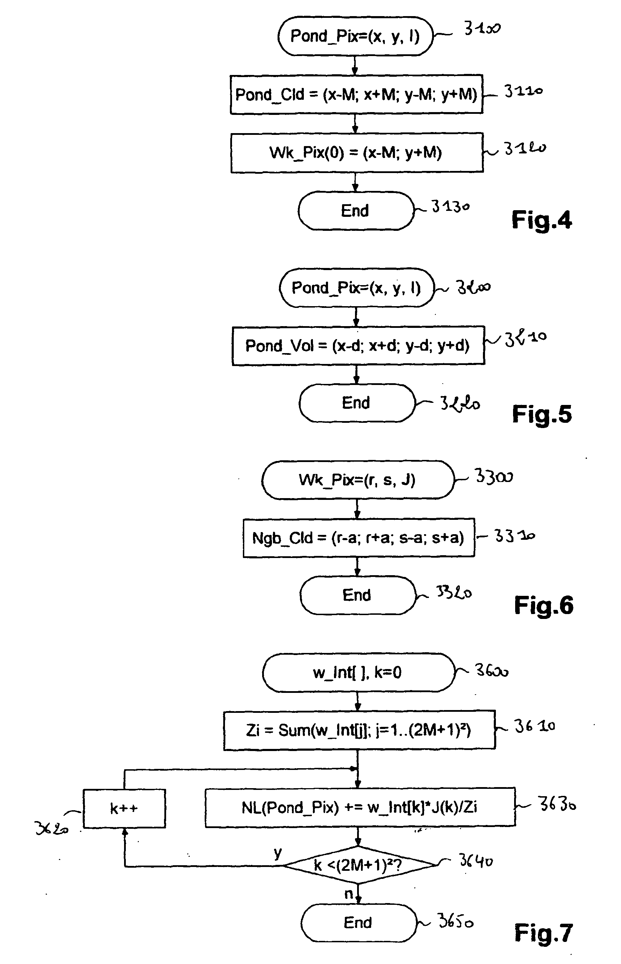

- le figures 4 à 7 représentent des mises en oeuvre particulières d'opération de la figure 3;

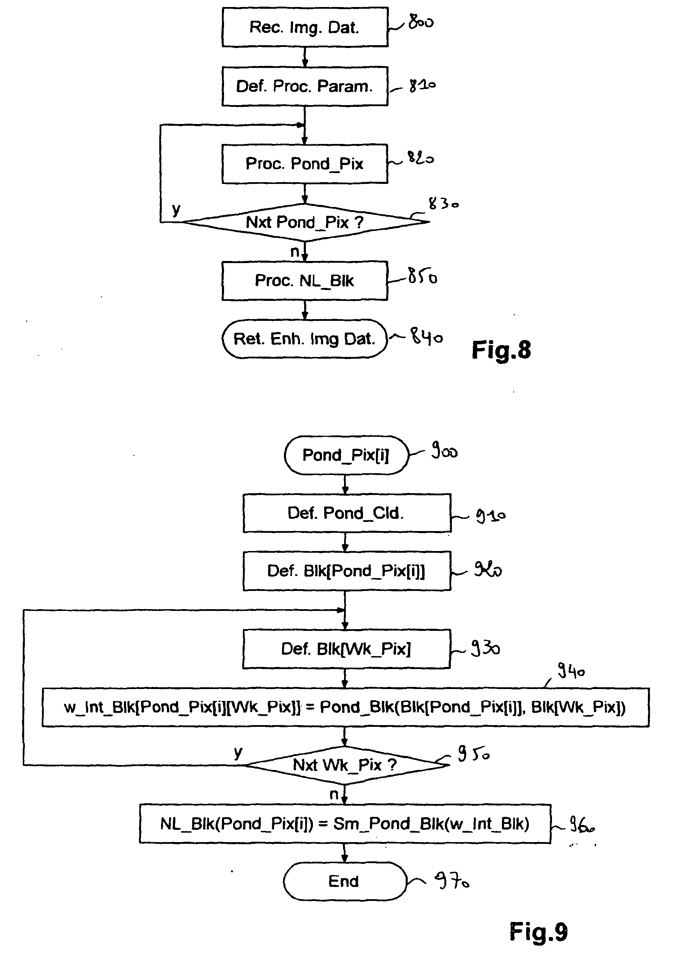

- la figure 8 décrit un mode de réalisation en variante de la figure 3 ; et

- les figures 9 à 11 représentent des mises en oeuvre particulières d'opérations de la figure 8.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

En outre, la description détaillée est augmentée de l'annexe A, qui donne la formulation de certaines formules mathématiques mises en oeuvre dans le cadre de l'invention. Cette Annexe est mise à part dans un but de clarification, et pour faciliter les renvois. Elle est partie intégrante de la description, et pourra donc non seulement servir à mieux faire comprendre la présente invention, mais aussi contribuer à sa définition, le cas échéant.

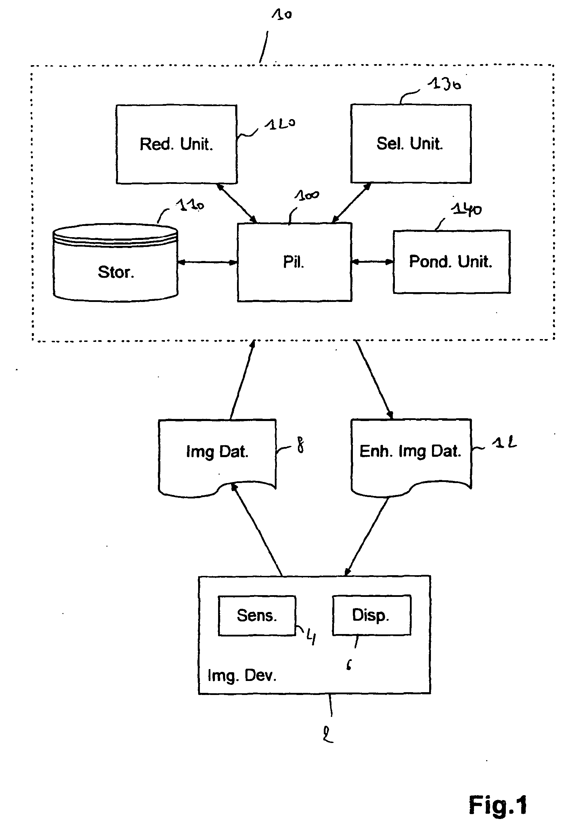

La figure 1 représente une vue schématique d'un dispositif de traitement d'images selon l'invention en interaction avec un dispositif d'imageries.

Un dispositif d'imagerie 2 comporte un capteur 4 et une unité d'affichage 6.

Après acquisition d'une image par le capteur 4, des données d'image brute 8 sont transmises au dispositif de traitement d'image 10. Le dispositif de traitement d'image 10 traite les données d'image brute 8 et renvoie des données d'image améliorée ou débruitée 12 pour affichage par l'unité d'affichage 6.

Le dispositif 10 comporte un pilote 100 qui commande une mémoire 110, une unité de réduction 120, une unité de sélection 130 et une unité de pondération 140 pour transformer les données d'image brute 8 en données d'image améliorée 12.

D'une manière générale, les données d'image brute 8 et les données d'image améliorée 12 peuvent être considérées comme un ensemble de n-uplets comportant pour chaque point de l'image :

* des coordonnées du point concerné dans l'image, et

* des données d'intensité qui sont associées à ce point.

L'invention trouve son application dans des images à deux dimensions, à trois dimensions ou plus.

Par conséquent, les coordonnées de point d'image peuvent être représentées par un n-uplet où n est la dimension de l'espace considéré (c'est-à-dire 2 pour une image plane, 3 pour une image en 3 dimensions, etc.).

En ce qui concerne les données d"intensité des points, l'invention concerne tous les types d'affichages, que ce soit en couleur ou en dégradés de gris.

Par conséquent, les données d'intensité peuvent être représentées par un nombre désignant une valeur de dégradé dans le cas d'une image en dégradés de gris, ou être un n-uplet, par exemple un triplé de valeurs RGB dans le cas d'une imagerie en couleur.

En outre, bien que le dispositif 10 ait été représenté sur la figure 1 comme extérieur au dispositif d'imagerie 2, il doit être compris que le dispositif 10 peut être indifféremment intégré à l'intérieur du dispositif d'imagerie 2 ou à l'extérieur de celui-ci.

Le rôle et les fonctions de l'unité de réduction 120, de l'unité de sélection 130, et de l'unité de pondération 140 apparaîtront mieux à la lecture de ce qui suit

La figure 2 représente un diagramme de haut niveau du traitement des données d'image brute 8 par le dispositif de traitement d'image 10.

Les données d'image brute 8 sont d'abord reçues dans une opération 200 et stockées dans la mémoire 110.

Ensuite, dans une opération 210, des paramètres de traitement sont entrés. Ces paramètres et leur influence sur le traitement d'image apparaîtront mieux à la lecture de la suite de la description.

On notera que l'opération 210 est optionnelle, et qu'il est par exemple possible de fixer les paramètres de traitement préalablement à toute acquisition d'image.

Ensuite, une boucle est lancée dans laquelle les points des données d'image reçues en 200 sont traités successivement dans une opération 220 pour débruiter l'image et produire les données d'image améliorée 12.

Une opération 230 assure le passage à un point suivant dans les données d'image brute 8, ou génère l'envoi des données d'image améliorée 12 dans une opération 240 lorsque tous les points des données d'image reçues ont été traités.

La figure 3 représente un premier mode de réalisation de l'opération 220.

Cette opération part, en 300, d'un point d'image courant à traiter Pond_Pix. Ici, le terme Pond_Pix fait référence à la notion de pixel. Cela est du au fait que, dans l'exemple décrit, l'image traitée est bidimensionnelle. Pour des images de dimensions supérieures, par exemples tridimensionnelles, on parlerait de Pond_Pix pour faire référence à un voxel.

Le résultat de l'opération 200 sera un point d'image dans les données d'image améliorée 12 qui a d'une part les coordonnées du point Pond_Pix, et d'autre part des données d'intensité débruitées.

Dans une opération 310, le pilote 100 appelle l'unité de réduction 120 pour sélectionner des points de travail autour du point Pond_Pix.

Ensuite, dans une opération 320, le pilote 100 appelle l'unité de sélection de voisinage 130 pour définir un voisinage de points autour du point Pond_Pix parmi les points de travail sélectionnés dans l'opération 310.

Ensuite, une boucle de pondération est lancée dans laquelle les points de travail sélectionnés dans l'opération 310 sont successivement utilisés en tant que points de travail courants Wk_Pix pour établir des valeurs de pondération de l'intensité du point Pond_Pix.

Ici, le point Pond_Pix le point qui est pondéré dans la boucle principale (opérations 220 et 230), et on qualifie le point Wk_Pix de point de travail car c'est lui qui varie dans la boucle secondaire (opérations 330 à 350).

Cette boucle commence en 330 avec l'appel de l'unité de sélection de voisinage 130, par le pilote 100, pour sélectionner un voisinage de points autour du point de travail courant Wk_Pix.

Dans une opération 340, une fonction Pond() est exécutée pour déterminer une valeur de pondération entre le voisinage du point Pond_Pix et le voisinage du point de travail Wk_Pix.

Le résultat de cette pondération est stocké dans un tableau w_Int[] en correspondance d'un identifiant du point de travail Wk_Pix.

Enfin, dans une opération 350, un test vérifie si l'ensemble des points de travail sélectionnés dans l'opération 310 ont été balayés.

Si c'est le cas, l'opération 220 se prolonge par le calcul d'une intensité pondérée pour le point Pond_Pix en 360, sur la base du tableau w_Int[] et des intensités des points Wk_Pix.

Ensuite, l'opération 30 se termine en 370 et les données d'image améliorée 12 sont envoyées au dispositif d'imagerie 2 pour affichage par l'unité d'affichage 6.

Dans le cas contraire, la boucle de pondération est réitérée avec un nouveau point de travail Wk_Pix en 330.

La fonction Pond() est basée sur une pondération de type « Non-Local Means », adaptée à un modèle de bruit de chatoiement empirique proposé dans « An adaptive weighted median filter for speckle suppression in medical ultrasound image », IEEE T. Circ. Syst., 36 :129-135, 1989 par Loupas et al.

D'une manière générale, la pondération du type « Non-Local Means » est basée sur l'hypothèse que deux pixels (ou voxels) similaires ont des voisinages similaires, quelque soit la distance « physique » qui les sépare au sein de l'image.

Comme le montre la formule (10) de l'annexe A cette pondération est définie par la somme des produits d'intensités $u(x_j)$ par des coefficients de pondération $w(x_i, x_j)$.

Les coefficients de pondération sont calculés sur la base des différences quadratiques des intensités des points considérés, comme représenté avec la formule (11) de l'annexe A.

Une fois tous les points considérés, la valeur pondérée est définie

Le problème de ce type de pondération est qu'il n'est pas adapté pour prendre en compte le bruit du type chatoiement.

La Demanderesse a observé qu'une formulation Bayesienne de la pondération « Non-Local Means » appliquée au modèle de bruit de chatoiement mentionné plus haut peut être exprimée en utilisant la formule de l'équation (20) de l'annexe A.

Ensuite, la Demanderesse a utilisé un modèle de bruit représenté par la formule (21) de l'annexe A, et a démontré que ce modèle peut être combiné avec la formule (20) pour établir la formule de pondération (30). Dans le cas décrit ici, on utilise $\gamma = 0,5$.

Dans la formule (30), les coefficients de pondération sont calculés sur la base des différences quadratiques des intensités des points considérés modulées par l'intensité de chaque point de pondération, comme représenté dans la formule (31) de l'annexe A.

Il ressort de la comparaison de la formule (10) et la formule (30) que, contrairement à toute attente, elles sont extrêmement similaires, en ce sens que l'on peut passer de l'une à l'autre en remplaçant la formule (11) par la formule (31), et inversement.

Ce résultat est extrêmement surprenant lorsque l'on tient compte des différences entre ces méthodes. Par ailleurs, la formule (30), tout en donnant des résultats nettement supérieurs à la formule (10), conserve un coût de calcul tolérable pour des applications en temps réel.

La figure 4 représente une mise en oeuvre en exemple de l'opération 310.

Cette opération part en 3100 d'un point courant Pond_Pix caractérisé comme on l'a vu précédemment par ses coordonnées et par l'intensité qui lui est associée.

En 3110, l'unité de réduction 120 définit l'ensemble des points de travail qui vont être considérés dans la boucle de pondération de l'opération 310, au moyen d'une règle de sélection.

Dans l'exemple ici décrit, cette règle de sélection définit un carré de longueur 2M+1 centré sur le point Pond_Pix. Le nombre M est un des paramètres de l'opération 210. Ce paramètre influe sur les performances de débruitage car il définit la fenêtre de travail qui va servir de base à la pondération du point Pond_Pix.

Ainsi, plus M est grand, et plus le coût de calcul est important, comme un grand nombre de points est pris en compte pour le débruitage, et meilleure est la qualité de ce dernier.

Les travaux de la Demanderesse ont établi qu'il n'est pas utile de prendre un nombre M trop élevé, du fait de la nature du bruit de chatoiement et des gains limités au-delà d'une certaine valeur.

Dans les expériences réalisées, M=8 est une valeur qui a fourni des résultats favorables. Les expériences de la Demanderesse ont montré qu'un fonctionnement optimum est obtenu avec un facteur M compris entre 4 et 12.

Dans d'autres modes de réalisation, la sélection peut être réalisée de manière différente, par exemple en sélectionnant des points des données d'image brute contenus dans un cercle de rayon choisi autour du point Pond_Pix au lieu d'un carré, ou en déterminant un rectangle.

Dans une application avec des images tridimensionnelles, les carrés deviennent des cubes, et les cercles des sphères. En outre, cette sélection peut comprendre en variante une pré-pondération des valeurs des intensités des points sélectionnés.

Ensuite, dans une opération 3120, le premier point de travail Wk_Pix (0) est défini et l'opération 310 se termine en 3130.

La figure 5 représente une mise en oeuvre en exemple de l'opération 120.

L'opération 320 part en 3200 du point courant Pond_Pix, qui est toujours caractérisé par ses coordonnées et son intensité.

En 3210, l'unité de sélection 130 opère en définissant un voisinage autour du point Pond_Pix, sur la base d'une règle de voisinage.

Dans l'exemple ici décrit, cette règle de voisinage définit un carré de longueur 2a+1 centré sur le point Pond_Pix. Le nombre a est un autre des paramètres de l'opération 210. Ce paramètre influe également sur les performances de débruitage car il définit le nombre de points qui vont servir de base à la pondération locale de l'intensité du point Pond_Pix.

Ainsi, plus le nombre a est grand, et plus le coût de calcul est important, comme un grand nombre de points est pris en compte pour la pondération.

Les travaux de la Demanderesse ont établi qu'il n'est pas utile de prendre un nombre a trop élevé, car cela revient à appliquer sensiblement le même coefficient de pondération à tous les points de la fenêtre de travail.

Dans les expériences réalisées, d=5 est une valeur qui a fourni des résultats favorables. Les expériences de la Demanderesse ont démontré qu'un fonctionnement optimum est obtenu avec un facteur d compris entre 1 et 15. Ces expériences ont également montré que la valeur optimale du facteur d dépend de la résolution de l'image traitée.

Dans d'autres modes de réalisation, la sélection peut être réalisée de manière différente, par exemple en sélectionnant des points de la fenêtre de travail contenus dans un cercle de rayon choisi autour du point Pond_Pix au lieu d'un carré, ou en déterminant un rectangle.

Ensuite, l'opération 320 se termine en 3220.

La figure 6 est une mise en oeuvre particulière de l'opération 330.

Cette mise en oeuvre est similaire à la mise en oeuvre de la figure 5 à cela près qu'elle part en 3300 d'un point de travail courant Wk_Pix parmi les points de la fenêtre de travail, et qu'elle définit un voisinage de ce point en 3310 sur la base des coordonnées du point Wk_Pix, avant de se terminer en 3320.

Dans l'exemple décrit ici, les opérations 320 et 330 sont réalisées de manière identique, c'est-à-dire que seul le point servant de base à la sélection du voisinage diffère.

Il serait néanmoins possible de réaliser les opérations 320 et 330 de manière distincte, en conservant une correspondance entre les voisinages issus de ces opérations.

La figure 7 représente une mise en oeuvre en exemple de l'opération 360.

L'opération 360 part en 3600 du tableau de pondération w_Int[] qui a été établi lors de la boucle de pondération des opérations 330 à 350 de la figure 3.

Dans une opération 3610, l'unité de pondération 140 calcule un facteur de normalisation Zi qui correspond à la somme des pondération du tableau w_Int[]. Le facteur de normalisation Zi sert à assurer que la somme des w_Int[k] est égale à 1.

Ensuite, l'intensité pondérée NL(Pond_Pix) du point courant Pond_Pix est définie comme la somme des intensités de chacun des points de travail Wk_Pix pondérées par la valeur de pondération w_Int[Wk_Pix] de chaque point de travail Wk_Pix, normalisé par le facteur Zi.

Cela est réalisé dans une boucle dans laquelle un compteur k incrémenté en 3620 permet de parcourir le tableau w_Int [].

À la k-ième itération de cette boucle, la valeur de l'intensité du point courant Pond_Pix est augmentée en 3630 d'une quantité correspondant au produit de :

* la valeur de pondération w_Int[k] du k-ième point de travail Wk_Pix,

* par la valeur de l'intensité J[k] du k-ième point de travail Wk_Pix, et

* normalisée par le facteur Zi.

Une condition d'arrêt en 3140 définit la fin du tableau w_Int[], ce après quoi l'opération 360 se termine en 3650.

Une fois le tableau w_Int[] entièrement parcouru, la valeur NL(Pond_Pix) contient la valeur d'intensité qui est associée au point Pond_Pix dans les données d'image améliorée 12. Comme mentionné plus haut, les données d'image améliorée 12 sont transmises au dispositif d'imagerie 2 lorsque l'ensemble des points Pond_Pix des données d'image brute 8 ont été traités.

La figure 8 représente une variante de l'opération de la figure 2. Cette variante a pour but d'améliorer la rapidité des calculs.

Dans cette variante, l'image associée aux données d'image brute 8 est découpée en blocs d'intersection non vide entre eux, notés par la suite Blk[Pond_Pix[i]].

Les blocs sont obtenus en sélectionnant un sous-ensemble de points des données d'image brute 8 espacés entre eux d'une distance n choisie. Ces points forment l'équivalent des points Pond_Pix de la figure 2. Les points ainsi sélectionnés peuvent être notés Pond_Pix[i], où i est l'indice d'un point Pond_Pix parmi tous les points sélectionnés.

Cette notation est utilisée car, dans cette variante, la boucle principale (opérations 820 et 830) ne produit pas des données directement exploitables, contrairement à la variante de la figure 2, et il est nécessaire pour comprendre ce mode de réalisation de distinguer les points de pondération Pond_Pix entre eux.

Ensuite, chaque bloc Blk[Pond_Pix[i]] est défini en sélectionnant des points des données d'image brute 8 dans un carré de côté a entourant un point Pond_Pix[i], avec 2a>=n pour assurer l'intersection des blocs Blk[Pond_Pix[i]]. Le facteur n influe sur le temps de calcul en ce que plus n est élevé, et plus le temps de calcul est réduit, mais plus le débruitage est dégradé.

Le traitement par bloc part du principe que des points d'un même bloc peuvent être pondérés par la même valeur.

L'intersection des blocs entre eux fait que certains points appartiennent à plusieurs blocs, ce qui permet d'obtenir une pondération de qualité comme cela apparaîtra plus bas.

Ce mode de réalisation diffère de celui de la figure 2 par la réalisation d'opérations 820 et 830 distinctes des opérations 220 et 230.

Ainsi, l'opération 820 est modifiée pour faire une pondération par blocs, qui sera décrite avec la figure 9.

L'opération 830 est modifiée pour sélectionner non plus le prochain point des données d'image brute 8 comme l'opération 230, mais pour sélectionner comme prochain point de pondération le centre du bloc Blk[Pond_Pix[i]] suivant.

Ce mode de réalisation comporte également une opération supplémentaire 850 après la boucle de pondération des opérations 820 et 830, et avant l'envoi en 840 des données d'image améliorée 12.

L'opération 850 permet de tenir compte du fait que certains des points des données d'image brute 8 sont présents dans plusieurs blocs Blk[Pond_Pix[i]].

La figure 9 représente une mise en oeuvre en exemple de l'opération 820 de la figure 8.

Les opérations 900, 910, 950 et 970 sont similaires aux opérations 300, 310, 350 et 370 de la figure 3.

Cette mise en oeuvre diffère de l'opération de la figure 3 par les opérations suivantes :

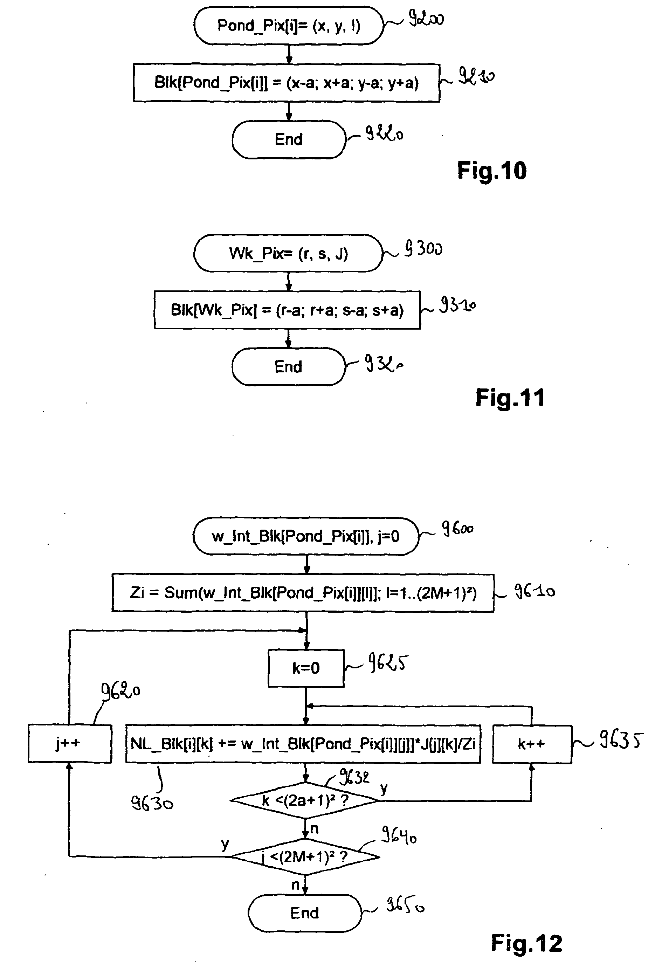

* l'opération 920, détaillée avec la figure 10, diffère de l'opération 320 en ce que le voisinage du point Pond_Pix est remplacé par le bloc Blk[Pond_Pix[i]],

* l'opération 930, détaillée avec la figure 11, diffère de l'opération 330 en ce que le voisinage du point de travail Wk_Pix est remplacé par le bloc Blk[Wk_Pix],

* l'opération 940, diffère de l'opération 340 en ce que la pondération est établie sur la base des blocs des opérations 920 et 930, et

* l'opération 960, détaillée avec la figure 12, diffère de l'opération 360 en ce que la valeur d'intensité est établie sur la base des pondérations de l'opération 940.

La figure 10 représente un exemple de mise en oeuvre de l'opération 920.

L'opération 920 part en 9200 du point Pond_Pix. Dans une opération 9210, le bloc Blk[Pond_Pix[i]] est défini parmi les points sélectionnés dans l'opération 910.

L'opération 9210 peut présenter les mêmes variantes de réalisations que celles mentionnées pour l'opération 3210, en remplaçant le nombre d par le nombre a, à ceci près qu'il faut maintenir la condition 2a>=n.

Ensuite, l'opération 920 se termine en 9230.

La figure 11 représente un exemple de mise en oeuvre de l'opération 930.

Les mêmes commentaires que ceux de l'opération 330 s'applique à l'opération 930, sauf qu'ici, l'opération de référence est l'opération 920 et non l'opération 320.

Cette opération part ainsi en 9300 d'un point de travail courant Wk_Pix, définit un bloc correspondant Blk[Wk_Pix] en 9310 et se termine en 9320.

Comme on l'a mentionné plus haut, sur la base du bloc Blk[pond_Pix[i]] et des blocs Blk[Wk_Pix], un tableau w_Int_Blk[Pond_Pix[i]] est calculé en 940, qui contient toutes les valeurs de pondération pour les points de travail sélectionnés dans l'opération 910.

La figure 12 représente un exemple de mise en oeuvre de l'opération 960.

Cette opération est très similaire à l'opération 360 décrite avec la figure 7, et elle diffère de celle-ci principalement en ce que les opérations qui la compose sont adaptées à un traitement par blocs.

Ainsi, les opérations 9600, 9610, 9620, 9640 et 9650 sont similaires aux opérations 3600, 3610, 3620, 9640 et 3650 de la figure 7, à cela près qu'elles concernent le tableau w_Int_Blk[] au lieu du tableau w_Int[].

L'opération 3630 est modifiée pour tenir compte de la différence entre le traitement par bloc. Cette opération est ainsi remplacée par une boucle comprenant les opérations 9625, 9630, 9632 et 9635. En résultat, le tableau d'intensités pondérées NL_Blk est ici à deux dimensions, c'est-à-dire qu'il a :

* un indice i qui indique quel point de pondération Pond_Pix[i] a servi à la pondération,

* un deuxième indice j qui indique l'indice de chaque point de travail Wk_Pix dans la fenêtre de travail définie à l'opération 910, et

* la valeur stockée au croisement des indices i et j correspond à la valeur pondérée de l'intensité du j-ième point du bloc Blk[Pond_Pix[i]].

Concrètement, la boucle comprenant les opérations 9625, 9630, 9632 et 9635 opère de manière similaire à l'opération 3630, sauf qu'elle doit établir une valeur d'intensité pondérée pour tous les points du bloc Blk[Pond_Pix[i]].

Pour cela, pour un point de travail d'indice j, elle applique le même coefficient de pondération w_Int_Blk[pond_Pix[i][j] à chaque point du bloc Wk_Pix correspondant.

Ainsi, le k-ième point du bloc Blk[Pond_Pix[i]] reçoit pour chaque indice j une quantité correspondant au produit de :

* la valeur de pondération w_Int_Blk[Pond_Pix[i][j]] associée au j-ième point de travail Wk_Pix,

* par la valeur de l'intensité J[j][k] du k-ième point du bloc Blk[Wk_Pix] associé au j-ième point de travail, et

* normalisée par le facteur Zi.

Ainsi, lorsque les points de l'image ont été pondérés par le traitement par blocs, le double indice permet de garder la trace de toutes les pondérations pour un point donné de l'image contenu dans plusieurs blocs distincts.

Ainsi, un exemple de réalisation de l'opération 850 de la figure 8 peut partir du tableau NL_Blk à deux dimensions, et définir un nouveau tableau A qui stocke :

* d'une part un indice global qui désigne la position d'un point des données d'image brute 8,

* d'autre part un n-uplet qui contient chacune des intensités pondérées du point d'indice i dans le tableau NL_Blk à deux dimensions.

Ainsi, plutôt que de retourner l'une des valeurs d'intensité pondérée dans les données d'image améliorée 12, l'opération 850 peut retourner la moyenne des intensités pondérées associée à chaque indice i dans le tableau A.

Cela permet d'améliorer de réduire le temps de calcul.

Les formules 40 à 43 de l'Annexe A récapitulent les calculs effectués dans le cadre de la variante de la figure 8.

Une autre manière d'accélérer encore les calculs serait de ne calculer les coefficients de pondération que lorsqu'ils sont éloignés de 1 et de 0 respectivement. Cela peut être réalisé en modifiant les fonctions Pond() et Pond_Blk() pour établir, en fonction d'un coefficient $\mu$:

* si Moyenne(I(xk), xk dans Blk[Pond_Pix[i]]) / Moyenne (I(xj), xj dans Blk[Wk_Pix]) est compris dans $[1/\mu ; \mu]$, alors calcul normal ;

* sinon, coefficient de pondération = 0 pour Blk[Wk_Pix].

Encore une autre manière serait de sélectionner les points comme suit :

* si |Moyenne(I(xk), xk dans Blk[Pond_Pix[i]]) / Moyenne (I(xj), xj dans Blk[Wk_Pix])| < seuil, alors calcul normal ;

* sinon, coefficient de pondération = 0 pour Blk[Wk_Pix].

D'autres exemples d'optimisation apparaîtront à l'homme du métier.

Dans ce qui précède, les sélections de points en voisinages et/ou en blocs peuvent être réalisées en réunissant ces éléments dans des "vecteurs".

Cela permet de se rapprocher conceptuellement de la formulation mathématique présentée dans les formules de l'Annexe A. Cela n'est cependant pas nécessaire.

De nombreuses manières pourront être utilisées pour mettre en oeuvre ces vecteurs, et il serait également possible d'utiliser des matrices.

Tout ce qui précède a été décrit d'une manière générale, sans tenir compte des conditions aux limites, c'est-à-dire par exemple la sélection de points au bord d'une image ou d'une fenêtre.

Pour tenir compte de cela, il apparaîtra plusieurs solutions qui peuvent se compléter ou être interchangées le cas échant :

* définir les points de départ et de fin des boucles de sorte que des points hors de l'image / de la fenêtre de travail ne soient pas hors-limite ;

* définir l'intensité de points hors-limite comme égale à zéro ;

\* dans le cas particulier de points hors-fenêtre de travail mais à l'intérieur de l'image, prendre en compte ces points comme s'ils faisaient partie de la fenêtre de travail.

Par ailleurs, la description qui précède a été réalisée en utilisant un facteur y égal à 0,5 dans la modélisation du bruit. Dans certaines variantes, le facteur $\gamma$ peut avoir une valeur différente, ce qui modifie la formule (31) de l'Annexe A comme présenté avec la formule (50), dans laquelle $\gamma$ vaut 1. En outre, la formule (31) est adaptée pour être rendue symétrique selon la formule (51).

La description qui précède a pour but de décrire un mode de réalisation particulier de l'invention. Elle ne saurait être considérée comme limitant ou décrivant celle-ci de manière limitative, et couvre notamment l'ensemble des combinaisons décrites par les revendications jointes.

L'invention couvre également, en tant que produits, les éléments logiciels décrits, mis à disposition sous tout "medium" (support) lisible par ordinateur. L'expression "medium lisible par ordinateur" comprend les supports de stockage de données, magnétiques, optiques et/ou électroniques, aussi bien qu'un support ou véhicule de transmission, comme un signal analogique ou numérique.

ANNEXE A

$$NL(u)(x_i) = \sum_{x_j \in V_{x_i}} w(x_i, x_j)\, u(x_j) \qquad (10)$$

$$w(x_i, x_j) = \frac{1}{Z_i} e^{-\frac{\left\| u(N_i)-u(N_j) \right\|_2^2}{h^2}} \qquad (11)$$

$$NL(u)(x_i) = \frac{\sum_{x_j \in V_{x_i}} u(x_j) \times p\big(u(x_i)\big|u(x_j)\big)}{\sum_{x_j \in V_{x_i}} p\big(u(x_i)\big|u(x_j)\big)} \qquad (20)$$

$$u(x) = v(x) + v^\gamma(x)\eta(x) \qquad (21)$$

$$w(x_i, x_j) = \frac{1}{Z_i} e^{-\frac{d_P\big(u(N_i)-u(N_j)\big)^2}{h^2}} \qquad (30)$$

$$d_P\big(u(N_i) - u(N_j)\big)^2 = \sum_{p=1}^{p=P} \frac{\big(u^{(p)}(x_i)-u^{(p)}(x_j)\big)^2}{u^{(p)}(x_j)^{2\gamma}} \qquad (31)$$

où :

\* $V_{xi}$ est la fenêtre des points de travail servant à la pondération de l'intensité u($x_i$) d'un point $x_i$,
\* w($x_i$, $x_j$) est la fonction de pondération entre des points $x_i$ et $x_j$,
\* $N_i$ est un voisinage de points entourant le point $x_i$ de taille P, et u($N_i$) le vecteur comprenant les intensités u($x_i$)

des points du voisinage $N_i$,
* v() est la valeur théorique débruitée de l'intensité u() mesurée, $\eta()$ une fonction de bruit, et y un facteur de modélisation, et
* h est un facteur de filtrage qui régit l'intensité du filtrage.

$$NL(u)(B_i) = \sum_{B_j \in V_{x_i}} w(B_i, B_j) \, u(B_j) \qquad (40)$$

$$NL(u)(B_i) = \frac{\sum_{x_j \in V_{x_i}} u(B_j) \times p\big(u(B_i)\big|u(B_j)\big)}{\sum_{B_j \in V_{x_i}} p\big(u(B_i)\big|u(B_j)\big)} \qquad (41)$$

$$w(B_i, B_j) = \frac{1}{Z_i} \, e^{-\frac{d_P\big(u(B_i)-u(B_j)\big)^2}{h^2}} \qquad (42)$$

$$d_P\big(u(B_i) - u(B_j)\big)^2 = \sum_{p=1}^{p=P} \frac{\big(u^{(p)}(B_i)-u^{(p)}(B_j)\big)^2}{u^{(p)}(B_j)} \qquad (43)$$

$$d_P\big(u(B_i) - u(B_j)\big)^2 = \sum_{p=1}^{p=P} \frac{\big(u^{(p)}(B_i)-u^{(p)}(B_j)\big)^2}{u^{(p)}(B_j)^2} \qquad (50)$$

$$d_P\big(u(B_i) - u(B_j)\big)^2 = \sum_{p=1}^{p=P} \frac{\big(u^{(p)}(B_i)-u^{(p)}(B_j)\big)^2}{\left(\frac{u^{(p)}(B_i)+u^{(p)}(B_j)}{2}\right)^{2\gamma}} \qquad (51)$$

où $B_i$ est un bloc de points de taille P, dont le centre est le point $x_i$, et avec $u(B_i)$ le vecteur comprenant les intensités $u(x_i)$ des points du bloc $B_i$.

## Revendications

1. Dispositif de traitement d'image, comprenant:

   * une mémoire (110) pour recevoir des données d'image (8) comprenant chacune un identifiant de point (x, y) et au moins une donnée d'intensité associée (1),
   * une unité de réduction (120), capable de sélectionner des points de travail (Pond_Cld) autour d'un point donné (Pond_Pix) sur la base d'une règle de réduction,
   * une unité de sélection (130) de voisinage, capable de sélectionner un voisinage (Pond_Vol) d'un point donné (Pond_Pix) sur la base d'une règle de voisinage,
   * une unité de pondération (140), capable de calculer une valeur de pondération (w_Int[k]} entre deux voisinages (Pond_Vol, Ngb_Vo), sur la base de distances entre les données d'intensité dans ces voisinages, et
   * un pilote (100), agencé pour appeler l'unité de réduction (120) avec des points à pondérer, et pour chaque point à pondérer, agencé pour :

- appeler l'unité de sélection (130), d'une part avec le point à pondérer pour définir un premier voisinage (Pond_Vol), et d'autre part avec les points de travail (Wk_Pix) associés pour définir une pluralité de deuxièmes voisinages (Ngb_Vol),
- appeler répétitivement l'unité de pondération (140) avec le premier voisinage (Pond_Vol) et un voisinage (Ngb_Vol) parmi la pluralité de deuxièmes voisinages, pour obtenir à chaque fois une valeur de pondération (w_Int[k]) de deuxième voisinage,
- multiplier chaque valeur de pondération (w_Int[k]) de deuxième voisinage par la donnée d'intensité (J[k]) du point de travail associé, pour définir à chaque fois une donnée d'intensité pondérée de point de travail, et
- définir une donnée d'intensité pondérée du point à pondérer (NL(Pond_Pix)) en additionnant chacune des données d'intensité pondérée de point de travail,

* l'unité de pondération est en outre agencée pour associer les valeurs associées à un voisinage Ni dans un vecteur **u**(Ni), et pour définir ladite distance entre les données d'intensité des voisinages à partir d'une somme de quotients,

**caractérisé en ce que** ladite distance élevée au carré d(**u**(Ni) - u(Ni))$^2$ entre deux vecteurs **u**(Ni) et u(Nj) est calculée à partir de la relation :

$$d_p\big(u(N_i) - u(N_j)\big)^2 = \sum_{p=1}^{p=P} \frac{\big(u^{(p)}(N_i) - u^{(p)}(N_j)\big)^2}{\dfrac{\big(u^{(p)}(N_i) + u^{(p)}(N_j)\big)^{2r}}{2}},$$

où P le nombre de colonnes du vecteur u(N), u$^{(p)}$(N) est la colonne d'indice p du vecteur u(N), et où y est un coefficient non-nul.

2. Dispositif selon rune des revendications précédentes, **caractérisé en ce que** le pilote (100) appelle des points à pondérer (Pond_Pix[i]) selon une règle de sélection.

3. Dispositif selon la revendication 2, **caractérisé en ce que** le pilote est agencé pour calculer une valeur d'intensité pondérée (NL_Blk[i][j]) pour chaque point dans un premier voisinage (Blk[[Pond_Pix[i]]) associé à un point à pondérer sélectionné (Pond_Pix[i]), sur la base des valeurs de pondération (w_Int_Blk[Pond_Pix[i]]) associées au point à pondérer (Pond_Pix[i]).

4. Dispositif selon la revendication 3, **caractérisé en ce que** le pilote est agencé pour définir la valeur d'intensité pondérée d'un point appartenant à plusieurs premiers voisinages distincts comme la moyenne des valeurs d'intensité pondérée associées à ce point dans chacun de ces premiers voisinages.

**Claims**

1. Image processing device comprising:

   • a memory (110) for receiving image data (8), each of which comprises a pixel identifies (x, y) and at least one associated piece of intensity data (I),
   • a reduction unit (120), capable of selecting working pixels (Pond_Cld) around a given pixel (Pond_Pix) on the basis of a reduction rule,
   • a neighbourhood selection unit (130), capable of selecting a neighbourhood (Pond_Vol) of a given pixel (Pond_Pix) on the basis of a neighbourhood rule.
   • a weighting unit (140), capable of calculating a weighting value (w_Int[k]) between two neighbourhoods (Pond_Val, (Vgb_Vol), on the basis of distances between the intensity data in these neighbourhoods and
   • a pilot (100), arranged to call the reduction unit (120) with pixels to be weighted and, for each pixel to be weighted, arranged to:

   - call the selection unit (130), on one hand, with the pixel to be weighted in order to define a first neighbourhood (Pond_Vol) and, on the other hand, with the associated working pixels (Wk_Pix) in order to define a plurality of second neighbourhoods (Ngb_Vol),

- repeatedly call the weighting unit (140) with the first neighbourhood (Pond_Vol) and a neighbourhood (Ngb_Vol) among the plurality of second neighbourhoods, in order to obtain each time a weighting value (w_Int[k]) of the second neighbourhood,
- multiply each weighting value (w_Int[k]) of the second neighbourhood by the intensity data (J[k]) of the associated working pixel, in order to define each time a piece of weighted intensity data of a working pixel, and
- define a piece of weighted intensity data of the pixel to be weighted (NL(Pand_Pix)) by adding each of the pieces of weighted intensity data of a working pixel,

• the weighting unit is additionally arranged to associate the associated values with a neighbourhood Ni in a vector u(Ni), and to define the said distance between the intensity data of the neighbourhoods on the basis of a sum of quotients,

**characterised in that** the said distance raised to the square d(u(Ni) - u(Ni))$^2$ between two vectors u(Ni) and u(Nj) is calculated on the basis of the relationship:

$$d_p\left(u\left(N_i\right) - u\left(N_j\right)\right)^2 = \sum_{p=1}^{p=P} \frac{\left(u^{(p)}(N_i) - u^{(p)}(N_j)\right)^2}{\frac{\left(u^{(p)}(N) + u^{(p)}(N_j)\right)^{y}}{2}},$$

where P is the number of columns of the vector u(N), u$^{(p)}$(N) is the index column p of the vector u(N), and where y is a non-zero coefficient.

2. Device according to any ane of the preceding claims, **characterised in that** the pilot (100) calls pixels to be weighted (Pond_Pix[i]) in accordance with a selection rule.

3. Device according to claim 2, **characterised in that** the pilot is arranged to calculate a weighted intensity value (NL_Blk[i][j]) for each pixel in a first neighbourhood (Blk[[Pond_Pix[i]]) associated with a selected pixel to be weighted (Pond_Pix[i]), on the basis of the weighting values (w_Int_Blk[Pond_Pix[i]]) associated with the pixel to be weighted (Pond_Pix[i]).

4. Device according to claim 3, **characterised in that** the pilot is arranged to define the weighted intensity value of a pixel belonging to several first separate neighbourhoods as the mean of the weighted intensity values associated with that pixel in each of these first neighbourhoods.

**Patentansprüche**

1. Bildverarbeitungsvorrichtung, die umfasst:

* einen Speicher (110) zum Empfangen von Bilddaten (8), die jewells einen Punktidentifizierer (x, y) und wenigstens eine zugeordnete Intensitätsdateneinheit (I) enthalten,
* eine Reduzierungseinheit (120), die Arbeitspunkte (Pond_Cld) um einen gegebenen Punkt (Pond_Pix) anhand einer Reduzierungsregel auswählen kann,
* eine Umgebungsauswahleinheit (130), die eine Umgebung (Pond_Vol) eines gegebenen Punktes (Pond_Pix) anhand einer Umgebungsregel auswählen kann,
* eine Gewichttmgseinheit (140), die einen Gewichtungswert (w_Int[k]) zwischen zwei Umgebungen (Pond_Vol, Ngb_Vol) anhand von Abständen zwischen Intensitätsdaten in diesen Umgebungen berechnen kann, und
* eine Vorsteuerung (100), die dazu ausgelegt ist, die Reduzierungseinheit (120) mit zu gewichtenden Punkten aufzurufen, und dazu ausgelegt ist, für jeden zu gewichtenden Punkt:

- die Auswahleinheit (130) einerseits mit dem zu gewichtenden Punkt aufzurufen, um eine erste Unigebung (Pond_Vol) zu definieren, und andererseits mit den zugeordneten Arbeitspunkten (Wk_Pix) aufzurufen, um mehrere zweite Umgebungen (Ngb_Vol) zu definieren,
- wiederholt die Gewichtungseinheit (140) mit der ersten Umgebung (Pond_Vol) und mit einer Umgebung (Ngb_Vol) unter den mehreren zweiten Umgebungen aufzurufen, um jedesmal einen Gewichtungswert (w_Int[k]) der zweiten Umgebung zu erhalten,

- jeden Gewichtungswert (w_Int[k]) einer zweiten Umgebung mit der Intensitätsdateneinheit (J[k]) des zugeordneten Arbeitspunktes zu multiplizieren, um jedesmal eine gewichtete Intensitätsdateneinheit des Arbeitspunkts zu definieren, und
- eine gewichtete Intensitätsdateneinheit des zu gewichtenden Punkts (NL(Pond_Pix)) zusätzlich zu jeder der gewichteten Intensitätsdateneinheiten des Arbeitspunkts zu definieren,

* wobei die Gewichtungseinheit außerdem dazu ausgelegt ist, die zugeordneten Werte einer Umgebung Ni in einem Vektor **u**(Ni) zuzuordnen und den Abstand zwischen den Intensitätsdaten der Umgebungen anhand einer Summe von Quotienten zu definieren,

**dadurch gekennzeichnet, dass** der zum Quadrat erhobene Abstand d($\mathbf{u}(N_i)$ - $\mathbf{u}(N_j$»$^2$ zwischen zwei Vektoren **u** ($N_i$) und **u**($N_j$) anhand der folgenden Beziehung berechnet wird:

$$d_p\left(u(N_i) - u\left(N_j\right)\right)^2 = \sum_{p=1}^{p=P} \frac{\left(u^{(p)}(N_i) - u^{(p)}(N_j)\right)^2}{\left(\frac{u^{(p)}(N_i) + u^{(p)}(N_j)}{2}\right)^{\gamma}},$$

wobei P die Anzahl von Spalten des Vektors **u**(N) ist, $\mathbf{u}^{(p)}$(N) die Spalte mit index p des Vektors **u**(N) ist und wobei y ein von null verschiedener Koeffizient ist.

2. Vorrichtung nach einem der vorgehenden Ansprüche, **dadurch gekennzeichnet, dass** die Vorsteuerung (100) zu gewichtende Punkte (Pond_Pix[i]) gemäß einer Auswahlregel aufruft.

3. Vorrichtung nach Anspruch 2, **dadurch gekennzeichnet, dass** die Vorsteuerung dazu ausgelegt ist, einen gewichteten Intensitätswert (NL_Blk[i][j]) für jeden Punkt in einer ersten Umgebung (Blk[Pond_Pix[i]]) zu berechnen, die einem ausgewählten zu gewichtenden Punkt (Pond_Pix[i]) anhand der dem zu gewichtenden Punkt (Pond_Pix[i]) zugeordneten Gewiehtungswerte (w_Int_Blk[Pond_Pix[i]]) zugeordnet ist.

4. Vorrichtung nach Anspruch 3, **dadurch gekennzeichnet, dass** die Vorsteuerung dazu ausgelegt ist, den gewichteten Intensitätswert eines Punkts, der zu mehreren verschiedenen ersten Umgebungen gehört, als Mittelwert der gewichteten Intensitätswerte, die diesem Punkt in jeder dieser ersten Umgebungen zugeordnet sind, zu definieren.

**Fig.1**

Rec. Img. Dat. —— ℓ∞

Def. Proc. Param. —— ℓ₁₀

Proc. Pond_Pix —— ℓ₂₀

Nxt Pond_Pix ? —— ℓ₄₀

y

n

Ret. Enh. Img Dat.

**Fig.2**

Pond_Pix —— 300

Def. Pond_Cld. —— 310

Def. Pond_Vol —— 320

Def. Ngb_Vol for Wk_Pix —— 330

w_Int[Wk_Pix] = Pond(Pond_Vol, Ngb_Vol) —— 340

Nxt Wk_Pix ? —— 350

y

n

NL(Pond_Pix) = Sm_Pond(w_Int) —— 360

End —— 370

**Fig.3**

Pond_Pix=(x, y, I) — 3100

Pond_Cld = (x-M; x+M; y-M; y+M) — 3110

Wk_Pix(0) = (x-M; y+M) — 3120

End — 3130

**Fig.4**

Pond_Pix=(x, y, I) — 3600

Pond_Vol = (x-d; x+d; y-d; y+d) — 3610

End — 3620

**Fig.5**

Wk_Pix=(r, s, J) — 3300

Ngb_Cld = (r-a; r+a; s-a; s+a) — 3310

End — 3320

**Fig.6**

w_Int[ ], k=0 — 3600

$Zi = Sum(w\_Int[j]; j=1..(2M+1)^2)$ — 3610

k++ — 3620

$NL(Pond\_Pix) += w\_Int[k]*J(k)/Zi$ — 3630

$k <(2M+1)^2?$ — 3640

y

n

End — 3650

**Fig.7**

Rec. Img. Dat. — 800

Def. Proc. Param. — 810

Proc. Pond_Pix — 820

Nxt Pond_Pix ? — 830

y

n

Proc. NL_Blk — 850

Ret. Enh. Img Dat. — 840

**Fig.8**

Pond_Pix[i] — 900

Def. Pond_Cld. — 910

Def. Blk[Pond_Pix[i]] — 920

Def. Blk[Wk_Pix] — 930

w_Int_Blk[Pond_Pix[i]][Wk_Pix]] = Pond_Blk(Blk[Pond_Pix[i]], Blk[Wk_Pix]) — 940

Nxt Wk_Pix ? — 950

y

n

NL_Blk(Pond_Pix[i]) = Sm_Pond_Blk(w_Int_Blk) — 960

End — 970

**Fig.9**

**Fig.10**

```
Pond_Pix[i]= (x, y, I)          ~ 9200

Blk[Pond_Pix[i]] = (x-a; x+a; y-a; y+a)   ~ 9210

End          ~ 9220
```

**Fig.10**

**Fig.11**

```
Wk_Pix= (r, s, J)          ~ 9300

Blk[Wk_Pix] = (r-a; r+a; s-a; s+a)   ~ 9310

End          ~ 9320
```

**Fig.11**

```
w_Int_Blk[Pond_Pix[i]], j=0          ~ 9600

Zi = Sum(w_Int_Blk[Pond_Pix[i]][l]; l=1..(2M+1)²)   ~ 9610

k=0          ~ 9615

9620

j++          NL_Blk[i][k] += w_Int_Blk[Pond_Pix[i]][j]]*J[j][k]/Zi          k++   ~ 9635

9630

9632
k <(2a+1)² ?   y

n

y     j <(2M+1)² ?          ~ 9640

n

End          ~ 9650
```

**Fig.12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LOUPAS.** An adaptive weighted median filter for speckle suppression in medical ultrasound image. *IEEE T. Circ. Syst.,* 1989, vol. 36, 129-135